# EUROPÄISCHE PATENTANMELDUNG

(11) **EP 3 620 978 A1**
(43) Veröffentlichungstag der Anmeldung: **11.03.2020**
(21) Anmeldenummer: 18194448.9
(22) Anmeldetag: 14.09.2018
(51) Int. Cl.: G06K 9/62, G06K 9/00

(54) **VERFAHREN UND VORRICHTUNG ZUR KLASSIFIZIERUNG VON OBJEKTEN**

(30) Priorität: 07.09.2018 EP 18193125
(71) Anmelder: Ibeo Automotive Systems GmbH, 22143 Hamburg (DE)
(72) Erfinder: Nitsch, Julia, 22143 Hamburg (DE); Schmidt, Max, 22143 Hamburg (DE)
(74) Vertreter: RGTH

(57) **Zusammenfassung**

Es wird ein Verfahren (100) zur Klassifizierung von Objekten vorgeschlagen, das das Bereitstellen (106) von Messdaten von einem Sensor für eine Merkmalsextraktionseinheit (13) sowie das Extrahieren (107) von modalitätsunabhängigen Merkmalen mittels der Merkmalsextraktionseinheit (13) aus den Messdaten umfasst, wobei die modalitätsunabhängigen Merkmale unabhängig von einer Sensormodalität des Sensors sind, sodass aus den modalitätsunabhängigen Merkmalen kein Rückschluss auf die Sensormodalität des Sensors möglich ist.

## Beschreibung

### Technisches Gebiet

Die Erfindung betrifft ein Verfahren sowie eine Vorrichtung zur Klassifizierung von Objekten.

### Stand der Technik

Für die Anwendung in der fahrerlosen Navigation von Fahrzeugen ist es essenziell zu wissen, welche Arten von Verkehrsteilnehmern das Fahrzeug umgeben sowie welche Arten von Infrastrukturen sich in der Umgebung befinden. In anderen Worten ist es essentiell Objekte zu klassifizieren. Aus dem Stand der Technik ist es bekannt, Messdaten verschiedener Sensormodalitäten zur Objektklassifizierung oder Objekterkennung zu verwenden. Dies ist insbesondere daher vorteilhaft, da die Messdaten der verschiedenen Sensormodalitäten teilweise komplementäre Informationen über die Umgebung liefern können. Typischerweise werden dabei die Daten der einzelnen Sensoren separat zu verarbeiten und anschießend auch separat zu klassifizieren. Erst im Anschluss können die Daten wieder zusammengeführt und weiter verarbeitet werden.

Ferner sind nach dem Stand der Technik die aus den Messdaten extrahierten Daten modalitätsabhängig, sodass es notwendig ist, dass ein separates Klassifizierungsmodul für jede Sensormodalität vorhanden und somit auch trainiert werden muss. Dies ist gerade dann, wenn es sich nicht um Bilddaten handelt, mit extremem Aufwand verbunden, da das Annotieren von Lidar- oder Radar-Datensätzen zum Anlernen von Klassifizierungsmodulen sehr zeitaufwendig und fehlerbehaftet ist. Der Grund dafür ist, dass die gemessenen Daten für die Menschen schwer verständlich sind und Personen, die entsprechende Datensätze annotieren, zeitaufwändig geschult werden müssen, bevor sie mit der Aufgabe beginnen können. Ferner kommt hinzu, dass im Hinblick auf Lidar und Radar die vorhandenen annotierten Datensätze im Vergleich zu Bilddatensätzen viel kleiner sind.

### Darstellung der Erfindung: Aufgabe, Lösung, Vorteile

Der Erfindung liegt die Aufgabe zugrunde, ein Verfahren sowie eine Vorrichtung zur Klassifizierung von Objekten derart zu verbessern, dass im Vergleich zum Stand der Technik eine Klassifizierungseinheit zum Klassifizieren der Merkmale nicht separat für die Messdaten verschiedener Sensormodalitäten trainiert werden muss, sondern einmalig anhand von Messdaten einer einzigen Sensormodalität angelernt werden kann.

Gelöst wird die oben genannte Aufgabe durch das erfindungsgemäße Verfahren zur Klassifizierung von Objekten. Das Verfahren umfasst das Bereitstellen von Messdaten von einem Sensor für eine Merkmalsextraktionseinheit. Ferner umfasst das Verfahren das Extrahieren von modalitätsunabhängigen Merkmalen, insbesondere mittels der Merkmalsextraktionseinheit, aus den Messdaten. Die modalitätsunabhängigen Merkmale sind unabhängig von einer Sensormodalität des Sensors, sodass aus den modalitätsunabhängigen Merkmalen kein Rückschluss auf die Sensormodalität möglich ist.

Bei dem Begriff "Sensormodalität" handelt es sich insbesondere um den deutschen Begriff des englischen Begriffs "sensor modality". In anderen Worten handelt es sich bei der Sensormodalität um eine Sensorkategorie oder einen Sensortyp. Sensoren unterscheiden sich somit insbesondere durch die Sensormodalität, das heißt den Sensortyp oder der Sensorkategorie. Insbesondere bestimmt die Sensormodalität das Messverfahren, mit dem die Messdaten erzeugt werden. Bei der Sensormodalität handelt es sich vorzugsweise um Lidar, Radar, Bild oder Ultraschall. Das heißt vorzugsweise, dass es sich bei dem entsprechenden Sensor der Modalität um einen Lidar-Sensor, einen Radar-Sensor, einen Bildsensor, insbesondere eine Kamera, oder einen Ultraschallsensor handelt.

Unter dem Begriff "Merkmale" sind insbesondere charakteristische Eigenschaften aus den Messdaten gemeint. Es handelt sich insbesondere um sogenannte "Features", die typischerweise abhängig von der Sensormodalität des Sensors, der die Messdaten aufgenommen hat, sind. Modalitätsunabhängige Merkmale sind allerdings unabhängig von der Sensormodalität des Sensors, der die Messdaten aufgenommen hat. Es handelt sich um generelle, in anderen Worten sensorunabhängige, Merkmale. Ein Rückschluss auf die Sensormodalität des Sensors ist anhand von modalitätsunabhängigen Merkmalen nicht möglich. Insbesondere sind die modalitätsunabhängigen Merkmale unabhängig von der Art des Messverfahrens, aus dem die Messdaten resultieren.

In anderen Worten ist das Verfahren dazu in der Lage, modalitätsunabhängige Merkmale aus den Messdaten zu extrahieren, die unabhängig von der Sensormodalität des Sensors sind. Dadurch muss eine Klassifizierungseinheit zur Klassifizierung der Merkmale nicht mehr für jede Sensormodalität separat vorgesehen und trainiert werden. Es genügt, eine einzige Klassifizierungseinheit für sämtliche Messdaten unterschiedlicher Sensormodalitäten zur Verfügung zu stellen.

Vorzugsweise gibt es mindestens eine erste und eine zweite Sensormodalität, wobei das Verfahren dazu ausgebildet ist, aus Messdaten eines Sensors der ersten Sensormodalität derart modalitätsunabhängige Merkmale zu extrahieren, dass Messdaten eines Sensors der zweiten Messmodalität rekonstruierbar sind. Ferner ist das Verfahren bevorzugterweise dazu ausgebildet aus Messdaten der zweiten Sensormodalität modalitätsunabhängige Merkmale zu extrahieren und zwar derart, dass Messdaten der ersten Modalität rekonstruierbar sind. Insbesondere gibt es mehr als zwei Sensormodalitäten, vor allem drei oder vier, wobei das Verfahren derart modalitätsunabhängige Merkmale extrahiert, dass aus diesen Merkmalen Messdaten jeder Sensormodalität rekonstruierbar sind.

Rekonstruierbar bedeutet, dass bei Vorsehung eines Decoders für jede Sensormodalität, also eines Decoders für die erste Sensormodalität und eines Decoders für die zweite Messmodalität diese in der Lage wären, aus den modalitätsunabhängigen Merkmalen Messdaten der entsprechenden Modalität zu erzeugen. Beispielsweise handelt es sich bei der ersten Sensormodalität um Lidar, während es sich bei der zweiten Modalität um Bild handelt. Die Merkmalsextraktionseinheit kann aus den Lidar-messdaten modalitätsunabhängige Merkmale extrahieren. Dabei kann aus diesen modalitätsunabhängigen Merkmalen ein Bild, das heißt Messdaten der zweiten Sensormodalität, rekonstruiert werden, obwohl die modalitätsunabhängigen Merkmale nur aus Lidar-Messdaten stammen.

Die Sensormodalität bestimmt vorzugsweise die Art der Messdaten, wobei es sich bei der Art der Messdaten um Radar-Messdaten, Lidar-Messdaten, Bilddaten oder Ultraschall-Messdaten handelt.

Insbesondere kann es sich bei den Messdaten um Punktwolken und/oder Bilddaten handeln. Insbesondere handelt es sich bei den Punktwolken um unsortierte Punktwolken. Vorzugsweise ist das Verfahren dazu ausgebildet, derart modalitätsunabhängige Merkmale aus Punktwolken und/oder Bilddaten zu extrahieren, dass Messdaten der jeweils anderen Messmodalität rekonstruierbar sind. Insbesondere ist die Merkmalsextraktionseinheit dazu ausgebildet aus einer Punktwolke und/oder Bilddaten modalitätsunabhängige Merkmale zu extrahieren, dass aus modalitätsunabhängigen Merkmalen Messdaten der jeweiligen anderen Sensormodalität, das heißt ein Bild und/oder eine Punktwolke, rekonstruiert werden können.

Insbesondere weist der Sensor eine erste Sensormodalität auf, wobei damit bevorzugterweise gemeint ist, dass der Sensor einer bestimmten Sensormodalität entspricht. Ein Sensor kann bevorzugterweise nur eine einzige Sensormodalität aufweisen.

Das Verfahren umfasst insbesondere das Erzeugen der Messdaten, insbesondere von Messdaten zum Klassifizieren, die anschließend an die Merkmalsextraktionseinheit weitergegeben werden. Insbesondere handelt sich bei den Messdaten um Lidar-Messdaten, sodass es sich bei dem Sensor der ersten Sensormodalität um einen Lidar-Sensor handelt. Zum Erzeugen der Messdaten umfasst das Verfahren insbesondere das Aussenden einer Vielzahl von Messpulsen, insbesondere zum Erzeugen von Lidar-Messdaten.

Bei einem Messpuls handelt es sich insbesondere um ein optisches, insbesondere elektromagnetisches, Signal. Der Messpuls hat vorzugsweise eine Wellenlänge, die nicht aus dem für das menschliche Auge sichtbaren Bereich stammt. Vorzugsweise wird aus Sicherheitsgründen unsichtbares Infrarot verwendet. Bevorzugterweise weist ein Messpuls eine Pulsbreite auf, sodass man den Messpuls als eine zeitlich begrenzte Portion elektromagnetischer Strahlung verstehen kann. Da es sich beim Messpuls um ein elektromagnetisches Signal handelt und somit die Geschwindigkeit des Messpulses bekannt ist, kann aus der Laufzeit eines Messpulses mithilfe der Lichtgeschwindigkeit darauf geschlossen werden, welche Strecke der Messpuls in der Laufzeit hinter sich gebracht hat.

Insbesondere umfasst das Verfahren das Durchführen einer Vielzahl von Scans. Dies bedeutet, dass Messpulse oder eine Messpulsfolge unter unterschiedlichen Richtungen sequentiell ausgesandt werden. Insbesondere handelt es sich bei dem Verfahren um ein scannendes Lidar-Verfahren. Nach Aussenden der Messpulse in einen auszumessenden Bereich ist ein jeweiliger Scan abgeschlossen und ein neuer Scan kann beginnen. Insbesondere werden nach jedem abgeschlossenen Scan mittels der Merkmalsextraktionseinheit modalitätsunabhängige Merkmale aus den Messdaten extrahiert, um Objekte zu klassifizieren.

Insbesondere umfasst das Verfahren das Erzeugen von Messdaten eines Sensors einer zweiten Sensormodalität, wobei das Verfahren das Bereitstellen der Messdaten für die Merkmalsextraktionseinheit umfasst. Die zweite Sensormodalität und die erste Sensormodalität unterscheiden sich vorzugweise. In anderen Worten umfasst das Verfahren vorzugsweise das Erzeugen von Messdaten eines Sensors einer zweiten Sensormodalität sowie von Messdaten eines Sensors einer ersten Sensormodalität, wobei das Verfahren das Bereitstellen der Messdaten beider Sensormodalitäten für die Merkmalsextraktionseinheit umfasst. Ferner kann das Verfahren das Erzeugen von Messdaten eines Sensors einer dritten Sensormodalität umfassen, die ebenfalls für die Merkmalsextraktionseinheit bereitgestellt werden. Die zweite Sensormodalität und die erste Sensormodalität unterscheiden sich vorzugsweise. Ferner kann das Verfahren das Erzeugen von Messdaten eines Sensors einer vierten Sensormodalität umfassen, die ebenfalls für die Merkmalsextraktionseinheit bereitgestellt werden. Bei der ersten Sensormodalität und/oder der zweiten Sensormodalität und/oder der dritten Sensormodalität und/oder der vierten Sensormodalität kann es sich um Lidar, Radar, Bild oder Ultraschall handeln. Insbesondere unterscheiden sich die Sensormodalitäten.

Das Verfahren umfasst somit insbesondere das Erzeugen von Messdaten unterschiedlicher Sensormodalitäten und eine modalitätsunabhängige Merkmalsextraktion, sodass ein Vorteil daraus gezogen wird, auf andere Sensordaten zum Anlernen der Klassifizierungseinheit zurückgreifen zu können.

Vorzugsweise umfasst die Merkmalsextraktionseinheit mindestens einen Feature-Extractor, wobei der Feature-Extractor modalitätsabhängige Merkmale aus den Messdaten extrahiert. Insbesondere umfasst die Merkmalsextraktionseinheit jeweils einen Feature-Extractor pro Sensormodalität der Sensoren, die Messdaten erzeugen. Insbesondere umfasst die Merkmalsextraktionseinheit einen Feature-Extractor für die erste Sensormodalität, das heißt vorzugsweise für Lidar-Messdaten, wobei der Feature-Extractor dazu ausgebildet ist, aus den Lidar-Messdaten Lidar-Merkmale zu extrahieren. Bei den Lidar-Merkmalen handelt es sich um modalitätsabhängige Merkmale.

Ferner bevorzugt umfasst die vorzugsweise Merkmalsextraktionseinheit einen jeweiligen entsprechenden Feature-Extractor für die zweite Sensormodalität und/oder die dritte Sensormodalität und/oder die vierte Sensormodalität, der dazu ausgebildet ist, aus entsprechenden Messdaten modalitätsabhängige Merkmale zu extrahieren, bspw. aus Radar-Messdaten entsprechende Radar-Merkmale oder aus Bilddaten entsprechende Bild-Merkmale. Bei dem Feature-Extractor handelt es sich insbesondere um einen "Encoder", vorzugsweise je nach Sensormodalität um einen Lidar-Encoder, Radar-Encoder, Image-Encoder oder Ultraschall-Encoder. Vorzugsweise kann es sich bei dem Encoder um einen Point-Cloud-Encoder handeln, insbesondere wenn es sich bei den Messdaten um Lidar-Messdaten handelt.

Ferner bevorzugt umfasst die Merkmalsextraktionseinheit eine Merkmalstransformationseinheit, die modalitätsabhängige Merkmale in modalitätsunabhängige Merkmale transformiert. Insbesondere werden sämtliche modalitätsabhängigen Merkmale, die die Feature-Extractor extrahieren, für die Merkmalstransformationseinheit bereitgestellt, wobei die Merkmalstransformationseinheit diese in modalitätsunabhängige Merkmale transformiert.

Bei den extrahierten modalitätsabhängigen Merkmalen des mindestens einen Feature-Extractors handelt es sich um einen Vektor, einen sogenannten Feature-Vektor. Insbesondere extrahieren die jeweiligen Feature-Extractor die Merkmale in Form von Vektoren, jedoch in jeweils separaten Räumen, je nach Sensormodalität, wobei die Merkmalstransformationseinheit dazu ausgebildet ist, die Vektoren der separaten Räume in einen gemeinsamen Raum, den sogenannten Feature-Raum, zu transformieren. Bei dem Feature-Raum handelt es sich insbesondere um einen Vektorraum, vorzugsweise einen metrischen Raum. Die Transformation ist insbesondere eine Abbildung der Vektoren von den modalitätsabhängigen Vektorräumen in den gemeinsamen Feature-Raum. Der Vorteil dieser Transformation liegt darin, dass nach der Transformation in den gleichen Feature-Raum anhand der Vektoren kein Rückschluss mehr auf die Sensormodalität des Sensors, von dem die Merkmale stammen, gezogen werden kann. Insbesondere gibt die Merkmalsextraktionseinheit als Ergebnis der Extraktion und Transformation einen Feature-Vektor aus, der modalitätsunabhängig ist. Vor allem stellt die Merkmalsextraktionseinheit Feature-Vektoren für die Klassifizierungseinheit zur Klassifizierung zur Verfügung.

Vorzugsweise kann das Verfahren das vorherige Anlernen der Merkmalsmalsextraktionseinheit, insbesondere der Merkmalstransformationseinheit und/oder der jeweiligen Feature-Extractor, umfassen. Der Begriff "vorherig" soll ferner bevorzugt bedeuten, dass das Anlernen vor dem Erzeugen von Messdaten zum Klassifizieren, durchgeführt wird. Vor allem wird hierfür der Merkmalsextraktionseinheit mindestens ein Datensatz zum Lernen bereitgestellt. Das unüberwachte Lernen wird insbesondere anhand mindestens eines nicht annotierten Datensatzes durchgeführt. Insbesondere ist die Merkmalstransformationseinheit mit Hilfe von unüberwachtem Lernen angelernt, um modalitätsunabhängige Merkmale zu lernen.

Insbesondere kann die Merkmalsmalsextraktionseinheit, insbesondere der Merkmalstransformationseinheit und/oder der jeweiligen Feature-Extractor, mit Hilfe eines neuronalen Netzwerkes, insbesondere eines Autoencoders, angelernt werden. Ferner kann die Merkmalstransformationseinheit mit Hilfe von tiefgehendem Lernen, sogenanntem Deep-Learning, angelernt werden.

Insbesondere umfasst das Verfahren das Klassifizieren der modalitätsunabhängigen Merkmale, insbesondere der von der Extraktionseinheit erhaltenen Feature-Vektoren, mittels einer Klassifizierungseinheit. Insbesondere verwendet das Verfahren eine einzige Klassifizierungseinheit für die Klassifizierung aller Merkmale der Sensoren sämtlicher Sensormodalitäten, von denen Messdaten erzeugt und bereitgestellt werden. Das Verfahren umfasst insbesondere nicht die Verwendung einer separaten Klassifizierungseinheit pro Sensormodalität.

Ferner kann das Verfahren das vorherige Anlernen der Klassifizierungseinheit mit Hilfe von überwachtem Lernen umfassen. Vor allem wird hierfür der Klassifizierungseinheit mindestens ein Datensatz zum Lernen bereitgestellt. Insbesondere wird die Klassifizierungseinheit anhand annotierter Bilddaten angelernt. Der Begriff "vorherig" soll ferner bevorzugt bedeuten, dass das Anlernen vor dem Erzeugen von Messdaten zum Klassifizieren durchgeführt wird. Die Klassifizierungseinheit wird insbesondere mit Hilfe von überwachtem Lernen angelernt, um modalitätsunabhängige Merkmale zu klassifizieren.

Das Anlernen der Klassifizierungseinheit anhand annotierter Bilddatensätze ist insbesondere deshalb besonders vorteilhaft, da annotierte Bilddatensätze zurzeit die größte Masse an annotierten Daten ausmachen. Dadurch, dass die Merkmalsextraktionseinheit dazu ausgebildet ist, modalitätsunabhängige Merkmale zu extrahieren, die unabhängig von einer Sensormodalität sind, kann eine einzige Klassifizierungseinheit verwendet werden, die anhand von Datensätzen einer einzigen Sensormodalität trainiert wird. Obwohl die Klassifizierungseinheit vorzugsweise an annotierten Bilddatensätzen angelernt wurde, ist sie aufgrund der Modalitätsunabhängikeit der extrahierten Merkmale gleichermaßen in der Lage, Merkmale aus Lidar-Messdaten zu klassifizieren, obwohl sie niemals an Lidar-Messdaten angelernt wurde. Darin besteht ein wesentlicher Vorteil des vorliegenden Verfahrens gegenüber dem Stand der Technik.

Das Verfahren umfasst vor allem das Weitergeben mindestens eines Feature-Vektors von der Merkmalsextraktionseinheit zur Klassifizierungseinheit, wobei das Klassifizieren der modalitätsunabhängigen Merkmale den Vergleich des erhaltenen Feature-Vektors mit jeweils einem zuvor ermittelten Durchschnitts-Feature-Vektor pro Klasse umfasst, und wobei bei Unterschreiten einer zuvor festgelegten Abweichungsgrenze ein entsprechendes Klassenlabel ausgegeben wird.

Das Anlernen der Klassifizierungseinheit kann vor allem das Bestimmen von Klassen umfassen. Insbesondere ermittelt die Klassifizierungseinheit anhand des mindestens einen Datensatz, der ihr zum Anlernen zur Verfügung gestellt wurde, die Klassen, für die es, nachdem das Anlernen abgeschlossen ist, sogenannte Klassenlabels vergeben soll. Ein Klasse kann beispielsweise Autos betreffen, während eine weitere Klasse Fußgänger betrifft.

Der mindestens eine Datensatz zum Anlernen umfasst bevorzugterweise eine Vielzahl von Feature-Vektoren, wobei jeder Klasse eine Mehrzahl von Feature-Vektoren zugeordnet werden kann. Das Anlernen kann ferner das Ermitteln eines Durschnitts-Feature-Vektors pro Klasse umfassen. Der Durchschnitts-Feature-Vektor einer Klasse wird vor allem durch Mitteln der Feature-Vektoren dieser Klasse ermittelt. Das Verfahren umfasst das Abspeichern der Durchschnitt-Feature-Vektoren.

Insbesondere kann das Verfahren das Weitergeben mindestens eines Feature-Vektors von der Merkmalsextraktionseinheit zur Klassifizierungseinheit umfassen, der mittels der Klassifizierungseinheit klassifiziert werden soll. Insbesondere findet zunächst eine Überarbeitung des Feature-Vektors mittels der Klassifizierungseinheit statt. Als Ergebnis wird ein überarbeiteter Feature-Vektor, vor allem ein Bottle Neck Vektor, erhalten. Die Überarbeitung dient vor allem dafür, dass klarere Trennlinien zwischen unterschiedlichen Klassen erkennbar sind.

Ferner kann die Klassifizierungseinheit ein Entscheidungsmodul umfassen, wobei dieses einen Vergleich des erhaltenen Feature-Vektors mit den Durchschnitts-Feature-Vektoren durchführt. Insbesondere werden die überarbeiteten Feature-Vektoren mit den Durchschnitts-Feature-Vektoren verglichen. Dabei stellen die Durchschnitts-Feature-Vektoren das sichere angelernte Wissen der Klassifizierungseinheit dar.

Zum Vergleich wird vor allem jeweils die Kosinusähnlichkeit zwischen dem erhaltenen Feature-Vektor, bevorzugterweise des überarbeiteten Feature-Vektors, und den Durchschnitts-Feature-Vektoren ermittelt. Insbesondere werden zuvor Abweichungsgrenzen, sogenannte Thresholds, festgelegt. Dies dient dazu festzulegen, bei welcher Ähnlichkeit eine bestimmte Klasse erkannt werden soll bzw. ab welcher Abweichung kein Klassenlabel für diese Klasse mehr vergeben werden soll. Bei Unterschreiten der Abweichungsgrenze zu einem Durchschnitts-Feature-Vektor wird ein entsprechendes Klassenlabel ausgegeben. In anderen Worten erkennt das Klassifizierungsmodul bei genügender Ähnlichkeit zum Durchschnitts-Feature-Vektor einer Klasse ein Objekt dieser Klasse und gibt das entsprechende Klassenlabel aus.

Bei Überschreiten aller zuvor festgelegten Abweichungsgrenzen von den Durchschnitts-Feature-Vektoren kann das Entscheidungsmodul als Ergebnis ausgeben, dass kein Objekt der Klassen erkannt wurde. Insbesondere wird kein Klassenlabel ausgegeben. Den Vergleich sowie die Ausgabe wird vor allem durch ein Entscheidungsmodul der Klassifizierungseinheit durchgeführt. Das Entscheidungsmodul entscheidet somit, inwiefern ein Klassenlabel bei Abweichung von dem sicheren Wissen der Klassifizierungseinheit ausgegeben werden soll.

Ferner umfasst die Erfindung ein Verfahren zur optischen Distanzmessung umfassend ein oben beschriebenes Verfahren zur Klassifizierung von Objekten.

Eine optische Distanzmessung zeichnet sich insbesondere dadurch aus, dass unter Ausnutzung von optischen Signalen, hier optischen Messpulsen, Distanzen bestimmt werden. Unter dem Begriff "Distanz" ist eine Entfernung zu verstehen. Unter der vom Messpuls zurückgelegten Distanz ist die Strecke zwischen einer Vorrichtung zur Durchführung des Verfahrens, die den Messpuls ausgesandt hat, und dem Objekt, das diesen reflektiert hat, plus der Strecke zwischen dem Objekt und der Vorrichtung, die den entsprechenden reflektierten Messpuls empfangen hat, zu verstehen. Die reflektierten Messpulse stellen jeweils Rückstreusignale der ausgesandten Messpulse dar. In anderen Worten handelt es sich bei den an einem Objekt reflektierten Messpulsen um zuvor mit Hilfe der Sendeeinheit ausgesandte Messpulse. Die optische Distanzmessung beruht vorzugsweise auf dem Time-of-Flight-Prinzip.

Insbesondere dient das Verfahren zur Klassifizierung von Objekten und/oder das Verfahren zur Distanzmessung zur Navigation eines fahrerlosen Fahrzeuges.

In einem weiteren Aspekt umfasst die Erfindung eine Vorrichtung zur Klassifizierung von Objekten, die zur Durchführung eines oben beschriebenen Verfahrens zur Klassifizierung von Objekten ausgebildet ist.

Die Vorrichtung umfasst insbesondere eine Sendeeinheit und eine Empfangseinheit. Insbesondere umfasst die Empfangseinheit jeweils mindestens einen Sensor pro Sensormodalität, wobei die Sendeeinheit jeweils die entsprechenden Sendemodule zur Erzeugung der Messdaten zum Aussenden der Signale zur Erzeugung der Messdaten der jeweiligen Sensormodalität aufweisen kann.

Insbesondere umfasst die Vorrichtung einen Sensor einer ersten Sensormodalität, vorzugsweise einen Sensor einer zweiten Sensormodalität und/oder einen Sensor einer dritten Sensormodalität und/oder einen Sensor einer vierten Sensormodalität. Insbesondere ist somit die Vorrichtung dazu ausgebildet, Messdaten von mindestens zwei Sensormodalitäten, vorzugsweise drei oder vier Sensormodalitäten, zu erzeugen.

Insbesondere handelt es sich bei der Vorrichtung um einen scannenden Lidar-Sensor, wobei dieser vorzugsweise weitere Sensoren anderer Sensormodalitäten umfassen kann. Vor allem kann die Vorrichtung ferner dazu ausgebebildet sein ein oben beschriebenes Verfahren zur Distanzmessung durchzuführen.

Ferner umfasst die Vorrichtung eine Merkmalsextraktionseinheit, die wiederum pro Sensormodalität der verwendeten Sensoren einen Feature-Extractor aufweist. Ferner umfasst die Merkmalsextraktionseinheit eine Merkmalstransformationseinheit zum Transformieren der modalitätsabhängigen Merkmale der jeweiligen Feature-Extractor in modalitätsunabhängige Merkmale. Die Merkmalstransformationseinheit ist insbesondere mit Hilfe von unüberwachtem Lernen angelernt, wobei die Klassifizierungseinheit weiter bevorzugt, insbesondere mit Hilfe von überwachtem Lernen angelernt ist.

Insbesondere dient die Vorrichtung zur Navigation eines fahrerlosen Fahrzeuges.

Ferner umfasst die Erfindung ein Computerprogrammprodukt, das ein computerlesbares Speichermedium umfasst, auf dem ein Programm gespeichert ist, dass es einem Computer ermöglicht, nachdem es in den Speicher des Computers geladen worden ist, ein oben beschriebenes Verfahren zur Klassifizierung von Objekten und/oder zur Distanzmessung, gegebenenfalls in Zusammenspiel mit einer oben beschriebenen Vorrichtung, durchzuführen.

Zudem betrifft die Erfindung ein computerlesbares Speichermedium, auf dem ein Programm gespeichert ist, das es einem Computer ermöglicht, nachdem es in den Speicher des Computers geladen worden ist, ein oben beschriebenes Verfahren zur Klassifizierung von Objekten und/oder zur Distanzmessung, gegebenenfalls in Zusammenspiel mit einer oben beschriebenen Vorrichtung, durchzuführen.

### Kurze Beschreibung der Zeichnungen

Es zeigen schematisch:
- Figur 1: ein Verfahrensschema eines erfindungsgemäßen Verfahren; und
- Figur 2: eine erfindungsgemäße Vorrichtung.

### Bevorzugte Ausführungsformen der Erfindung

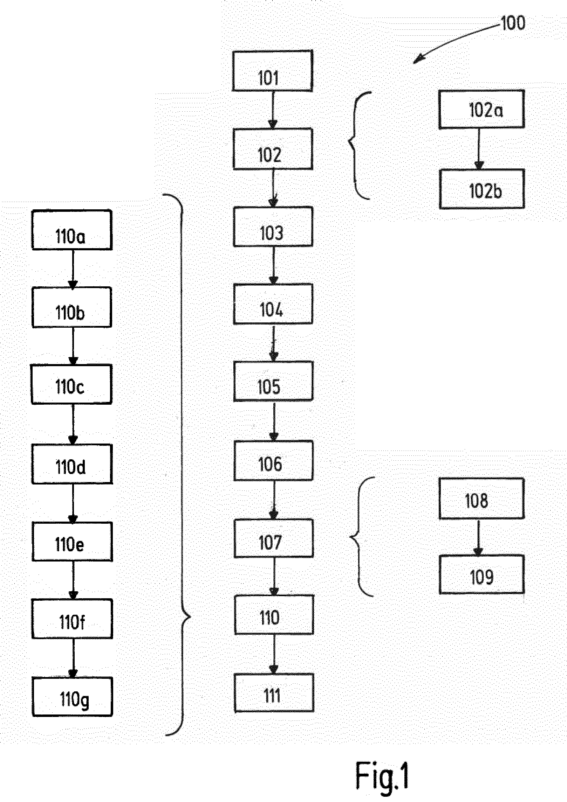

In Figur 1 ist ein Verfahrensschema eines erfindungsgemäßen Verfahrens (100) dargestellt.

Das erfindungsgemäße Verfahren (100) kann vorzugsweise das vorherige Anlernen (101) einer Transformationseinheit (17) einer Merkmalsextraktionseinheit (13) umfassen. Ferner bevorzugt kann das erfindungsgemäße Verfahren (100) das vorherige Anlernen (102) einer Klassifizierungseinheit (18) umfassen.

Das Anlernen (102) der Klassifizierungseinheit (18) kann vor allem das Bestimmen (102a) von Klassen umfassen, insbesondere anhand des mindestens einen Datensatz, der der Klassifizierungseinheit (18) zum Anlernen zur Verfügung gestellt wurde. Es werden die Klassen bestimmt, für die die Klassifizierungseinheit (18), nachdem das Anlernen abgeschlossen ist, sogenannte Klassenlabels vergeben soll. Ferner kann das Anlernen (102) kann das Ermitteln (102b) und Abspeichern eines Durschnitts-Feature-Vektors pro Klasse umfassen.

Das Verfahren umfasst insbesondere das Bereitstellen (106) von Messdaten für die Merkmalsextraktionseinheit. Insbesondere kann das Verfahren zuvor das Erzeugen (103) von Messdaten eines Sensors einer ersten Sensormodalität, ferner bevorzugt ebenfalls das Erzeugen (104) von Messdaten eines Sensors einer zweiten Sensormodalität und/oder das Erzeugen (105) von Messdaten eines Sensors einer dritten Sensormodalität umfassen. Schritte 103 bis 105 können vorzugsweise gleichzeitig durchgeführt werden. Insbesondere umfasst das Verfahren das Durchführen von Scans, wobei nach dem Abschluss eines Scans Messdaten aller Sensormodalitäten vorliegen und für die Merkmalsextraktionseinheit (13) bereitgestellt werden können.

Ferner umfasst das Verfahren das Extrahieren (107) von modalitätsunabhängigen Merkmalen. Dazu werden vorzugsweise modalitätsabhängige Merkmale mittels eines jeweiligen Feature-Extractors extrahiert (108) und diese modalitätsabhängigen Merkmale mittels der Transformationseinheit (17) in modalitätsunabhängige Merkmale transformiert (109). Ferner kann das Verfahren das Klassifizieren (110) der modalitätsunabhängigen Merkmale mittels der Klassifizierungseinheit (18) umfassen, sodass eine Objektklassifizierung (111) durchgeführt werden kann.

Das Klassifizieren (110) kann umfassen, dass mindestens ein Feature-Vektor von der Merkmalsextraktionseinheit (13) zur Klassifizierungseinheit (18) weitergegeben wird (110a), wobei die Klassifizierungseinheit (18) den Feature-Vektor vorzugsweise überarbeitet (110b). Der Feature-Vektor, der erhaltene oder bevorzugterweise der überarbeitete, wird jeweils mit den zuvor ermittelten Durchschnitts-Feature-Vektoren verglichen (110c). Ferner können zum Vergleich Abweichungsgrenzen zu den Durchschnitts-Feature-Vektoren festgelegt werden (110d). Vorzugweise werden die jeweiligen Kosinusähnlichkeiten zwischen dem Feature-Vektor und den Durchschnitts-Feature-Vektoren ermittelt (110e). Bei Unterschreiten einer der zuvor festgelegten Abweichungsgrenzen erfolgt insbesondere die Ausgabe (110f) des entsprechenden Klassenlabels, während bei Überschreiten aller zuvor festgelegten Abweichungsgrenzen die Ausgabe (110g) erfolgt, dass kein Objekt der Klassen erkannt wurde. Dies geschieht vor allem mittels eines Entscheidungsmoduls (18a) der Klassifizierungseinheit (18).

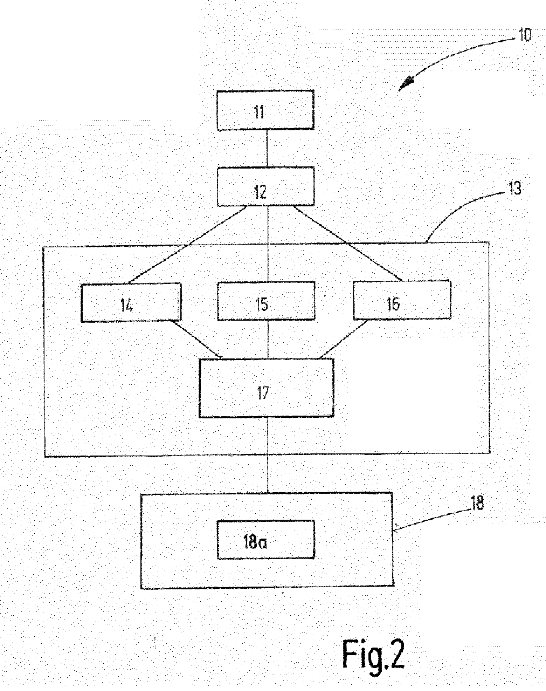

Figur 2 zeigt eine schematische Ansicht einer erfindungsgemäßen Vorrichtung (10). Die Vorrichtung (10) umfasst eine Sendeeinheit (11) und eine Empfangseinheit (12). Insbesondere umfasst die Empfangseinheit (12) jeweils mindestens einen Sensor pro Sensormodalität, wobei die Sendeeinheit (11) jeweils die entsprechenden Sendemodule zur Erzeugung der Messdaten zum Aussenden der Signale zur Erzeugung der Messdaten der jeweiligen Sensormodalität aufweisen kann. Beispielsweise kann die Sendeeinheit (11) jeweils eine Quelle zum Aussenden von Lidar- und Radar-Messdaten aufweisen.

Die in der Empfangseinheit (12) empfangenen Messdaten werden der Merkmalsextraktionseinheit (13) bereitgestellt. Die Merkmalsextraktionseinheit (13) umfasst einen Feature-Extractor (14) für Messdaten des Sensors der ersten Sensormodalität, einen Feature-Extractors (15) für Messdaten des Sensors der zweiten Sensormodalität und einen Feature-Extractors (16) für Messdaten des Sensors der dritten Sensormodalität. Die jeweiligen Feature-Extractor (14, 15, 16) extrahieren modalitätsabhängige Merkmale, die der Transformationseinheit (17) bereitgestellt werden, die daraus modalitätsunabhängige Merkmale generiert. Ferner weist die Vorrichtung eine Klassifizierungseinheit (18) auf, die die modalitätsunabhängigen Merkmale der Transformationseinheit (17) klassifiziert. Die Klassifizierungseinheit (18) umfasst ein Entscheidungsmodul (18a).

### Bezugszeichenliste

- 101: Anlernen der Transformationseinheit
- 102: Anlernen der Klassifizierungseinheit
- 102a: Bestimmen von Klassen
- 102b: Ermitteln und Abspeichern eines Durschnitts-Feature-Vektors pro Klasse
- 103: Erzeugen von Messdaten eines Sensors einer ersten Sensormodalität
- 104: Erzeugen von Messdaten eines Sensors einer zweiten Sensormodalität
- 105: Erzeugen von Messdaten eines Sensors einer dritten Sensormodalität
- 106: Bereitstellen von Messdaten für die Merkmalsextraktionseinheit
- 107: Extrahieren von modalitätsunabhängigen Merkmalen
- 108: Extrahieren von modalitätsabhängigen Merkmalen mittels eines jeweiligen Feature-Extractors
- 109: Transformieren von modalitätsabhängigen Merkmalen in modalitätsunabhängige Merkmale mittels der Transformationseinheit
- 110: Klassifizieren der modalitätsunabhängigen Merkmale mittels der Klassifizierungseinheit
- 110a: Weitergeben mindestens eines Feature-Vektors von der Merkmalsextraktionseinheit zur Klassifizierungseinheit
- 110b: Überarbeitung des Feature-Vektors mittels der Klassifizierungseinheit
- 110c: jeweiliger Vergleich des Feature-Vektors mit einem zuvor ermittelten Durchschnitts-Feature-Vektor pro Klasse
- 110d: Festlegen von Abweichungsgrenzen
- 110e: Ermitteln der jeweiligen Kosinusähnlichkeit zwischen dem Feature-Vektor und den Durchschnitts-Feature-Vektoren
- 110f: bei Unterschreiten einer zuvor festgelegten Abweichungsgrenze Ausgabe des entsprechendes Klassenlabels
- 110g: bei Überschreiten aller zuvor festgelegten Abweichungsgrenzen Ausgabe, dass kein Objekt der Klassen erkannt wurde
- 111: Objektklassifizierung

- 10: Vorrichtung
- 11: Sendeeinheit
- 12: Empfangseinheit
- 13: Merkmalsextraktionseinheit
- 14: Feature-Extractor für Messdaten des Sensors der ersten Sensormodalität
- 15: Feature-Extractor für Messdaten des Sensors der zweiten Sensormodalität
- 16: Feature-Extractor für Messdaten des Sensors der dritten Sensormodalität
- 17: Merkmalstransformationseinheit
- 18: Klassifizierungseinheit
- 18a: Entscheidungsmodul

## Patentansprüche

1. Verfahren (100) zur Klassifizierung von Objekten,
wobei das Verfahren (100) das Bereitstellen (106) von Messdaten von einem Sensor für eine Merkmalsextraktionseinheit (13) umfasst,
**dadurch gekennzeichnet, dass**
das Verfahren (100) das Extrahieren (107) von modalitätsunabhängigen Merkmalen aus den Messdaten umfasst,
wobei die modalitätsunabhängigen Merkmale unabhängig von einer Sensormodalität des Sensors sind, sodass aus den modalitätsunabhängigen Merkmalen kein Rückschluss auf die Sensormodalität des Sensors möglich ist.

2. Verfahren (100) nach Anspruch 1,
**dadurch gekennzeichnet, dass**
es mindestens eine erste Sensormodalität und eine zweite Sensormodalität gibt,
wobei das Verfahren (100) dazu ausgebildet ist, aus Messdaten eines Sensors der ersten Sensormodalität derart modalitätsunabhängige Merkmale zu extrahieren, dass Messdaten eines Sensors der zweiten Messmodalität rekonstruierbar sind.

3. Verfahren (100) nach einem der vorherigen Ansprüche,
**dadurch gekennzeichnet, dass**
der Sensor eine erste Sensormodalität aufweist,
wobei das Verfahren (100) das Erzeugen (103) der Messdaten umfasst.

4. Verfahren (100) nach einem der vorherigen Ansprüche,
**dadurch gekennzeichnet, dass**
das Verfahren (100) das Erzeugen (104) von Messdaten eines Sensors einer zweiten Sensormodalität umfasst,
wobei das Verfahren (100) das Bereitstellen (106) der Messdaten für die Merkmalsextraktionseinheit (13) umfasst.

5. Verfahren (100) nach einem der vorherigen Ansprüche,
**dadurch gekennzeichnet, dass**
das Verfahren (100) das Erzeugen (105) von Messdaten eines Sensors einer dritten Sensormodalität umfasst,
wobei das Verfahren (100) das Bereitstellen (106) der Messdaten für die Merkmalsextraktionseinheit (13) umfasst.

6. Verfahren (100) nach einem der vorherigen Ansprüche,
**dadurch gekennzeichnet, dass**
die Merkmalsextraktionseinheit (13) mindestens einen Feature-Extractor (14, 15, 16) umfasst,
wobei der Feature-Extractor (14, 15, 16) modalitätsabhängige Merkmale aus den Messdaten extrahiert (108).

7. Verfahren (100) nach Anspruch 6,
**dadurch gekennzeichnet, dass**
die Merkmalsextraktionseinheit (13) eine Merkmalstransformationseinheit (17) umfasst,
wobei die Merkmalstransformationseinheit (17) modalitätsabhängige Merkmale in modalitätsunabhängige Merkmale transformiert (109).

8. Verfahren (100) nach einem der vorherigen Ansprüche,
**dadurch gekennzeichnet, dass**
das Verfahren das vorherige Anlernen (101) der Merkmalsextraktionseinheit (13) mithilfe von unüberwachtem Lernen umfasst.

9. Verfahren (100) nach einem der vorherigen Ansprüche,
**dadurch gekennzeichnet, dass**
das Verfahren (100) das Klassifizieren (110) der modalitätsunabhängigen Merkmale mittels einer Klassifizierungseinheit (18) umfasst.

10. Verfahren (100) nach Anspruch 9,
**dadurch gekennzeichnet, dass**
das Verfahren (102) das vorherige Anlernen (102) der Klassifizierungseinheit (18) mithilfe von überwachtem Lernen umfasst.

11. Verfahren (100) nach einem der Ansprüche 9 oder 10,
**dadurch gekennzeichnet, dass**
das Verfahren (100) das Weitergeben (110a) mindestens eines Feature-Vektors von der Merkmalsextraktionseinheit (13) zur Klassifizierungseinheit (18) umfasst,
wobei das Klassifizieren (110) der modalitätsunabhängigen Merkmale den Vergleich (110c) des erhaltenen Feature-Vektors mit jeweils einem zuvor ermittelten Durchschnitts-Feature-Vektor pro Klasse umfasst, und
wobei bei Unterschreiten (110f) einer zuvor festgelegten Abweichungsgrenze ein entsprechendes Klassenlabel ausgegeben wird.

12. Verfahren zur optischen Distanzmessung,
**dadurch gekennzeichnet, dass**
das Verfahren zur optischen Distanzmessung ein Verfahren zur Klassifizierung von Objekten (100) umfasst.

13. Vorrichtung (10) zur Klassifizierung von Objekten,
wobei die Vorrichtung (10) zur Durchführung eines Verfahrens (100) nach einem der Ansprüche 1 bis 12 ausgebildet ist.

14. Computerprogrammprodukt, das ein computerlesbares Speichermedium umfasst, auf dem ein Programm gespeichert ist, das es einem Computer ermöglicht, nachdem es in den Speicher des Computers geladen worden ist, ein Verfahren (100) gemäß einem der Ansprüche 1 bis 12, gegebenenfalls im Zusammenspiel mit einer Vorrichtung (10) gemäß Anspruch 13, durchzuführen.

15. Computerlesbares Speichermedium, auf dem ein Programm gespeichert ist, das es einem Computer ermöglicht, nachdem es in den Speicher des Computers geladen worden ist, ein Verfahren gemäß einem der Ansprüche 1 bis 12, gegebenenfalls im Zusammenspiel mit einer Vorrichtung (10) gemäß Anspruch 13, durchzuführen.
